# EUROPÄISCHE PATENTSCHRIFT

(11) **EP 0 429 836 B1**
(45) Veröffentlichungstag und Bekanntmachung des Hinweises auf die Patenterteilung: **20.10.1993**
(21) Anmeldenummer: 90119961.2
(22) Anmeldetag: 18.10.1990
(51) Int. Cl.: F16K 17/04, F16K 17/164

(54) **Selbsttätiges Sicherheitsabsperrventil**
Automatic shutoff safety valve
Soupape de blocage de sécurité automatique

(30) Priorität: 17.11.1989 DE 3938216
(43) Veröffentlichungstag der Anmeldung: 05.06.1991
(73) Patentinhaber: Regel + Messtechnik GmbH Regler- und Anlagenbau für Gas-Druckreglung, D-34123 Kassel (DE)
(72) Erfinder: Fischer, Rudolf, Dipl.-Ing., W-3500 Kassel (DE)
(74) Vertreter: Walther, Horst, Dipl.-Ing.

(56) Entgegenhaltungen:
- EP-A- 0 305 293
- DE-A- 2 303 715
- FR-A- 2 429 951
- FR-A- 2 574 522
- GB-A- 2 017 271

## Beschreibung

Die Erfindung betrifft ein selbsttätiges Sicherheitsabsperrventil, insbesondere für Druck-Regelanlagen, dessen Verschlußstück auf einer in Umfangsrichtung federbelasteten Welle angeordnet, in der Offenstellung mittels einer Rasteinrichtung verriegelbar und mittels einer die Rasteinrichtung entriegelnden Auslöseeinrichtung betätigbar ist, wobei die Rasteinrichtung aus einer die Welle koaxial umgebenden gehäusefesten Führungsbuchse mit Ausnehmungen und einem die Führungsbuchse koaxial umgebenden im Gehäuse drehbeweglich angeordneten Schaltlagerring besteht, wobei in der Führungsbuchse und im Schaltlagerring Schaltelemente vorgesehen sind.

Ein solches selbsttätiges Sicherheitsabsperrventil ist in der DE-A- 23 03 715 beschrieben. Bei diesem Sicherheitsabsperrventil sind in der Führungsbuchse und im Schaltlagerring Schaltelemente vorgesehen, die aus einer Schaltwalze und einer Schaltnocke bestehen, die am Schaltlagerring angebracht ist. Wird demzufolge der Schaltlagerring durch die Auslöseeinrichtung betätigt, dann nimmt die Schaltnocke eine andere Lage ein, welche es der Schaltwalze ermöglicht, aus der Rastlage, in der sie vorher in der Welle lag, herauszukommen, so daß die Welle unter der Wirkung der Schließfeder verdreht wird und damit das Verschlußstück auf den Ventilsitz aufdrückt.

Ist ein solches Sicherheitsabsperrventil in Tätigkeit getreten, d.h. ist die Schließstellung erreicht, dann muß wieder die sogenannte Null-Stellung eingestellt werden in der das Verschlußstück der Sicherheitsabsperrventiles in der Offenstellung steht.

Beim Rückführen des Sicherheitsabsperrventiles in die Offenstellung muß dafür gesorgt werden muß, daß in dieser Lage des Sicherheitsabsperrventiles die Schaltnocke am Schaltlagerring genau der Schaltwalze gegenübersteht. Wird diese Null-Lage nicht erreicht, dann entsteht ein Moment, welches die Tendenz hat, dem Schaltlagerring ein Drehmoment zu erteilen. Um die erforderliche Null-Lage zu erreichen, sind Hilfsmittel erforderlich, die äußerst umständlich und zeitaufwendig eingestellt werden müssen, damit die optimale Lager der Schaltelemente gewährleistet ist.

Der Erfindung liegt daher die Aufgabe zugrunde, das Sicherheitsabsperrventil so auszubilden, daß bei Einstellung des Sicherheitsabsperrventiles in die Offenstellung (Nullstellung) keine Hilfsmittel notwendig sind und auch ein genaues und zeitaufwendiges Arbeiten dabei vermieden wird.

Das wird erfindungsgemäß dadurch erreicht, daß die Rückstellbewegung des Schaltlagerringes durch einen am Schaltlagerring oder an der Führungsbuchse angeordneten, mit den Schaltelementen (2,3) zusammen wirkenden Anschlag begrenzt ist.

Gemäß der einen Ausführungsform ist die Ausbildung dabei so getroffen, daß der Aufnahmeteil für das eine Schaltelement zugleich als Anschlag für das andere Schaltelement dient.

Dabei liegen die Schaltelemente auf einer gemeinsamen anlagefläche auf, welche, den Aufnahmeteil und den Anschlag darstellen.

Die Schaltelemente sind Rundteile, z.B. Schaltwalzen oder Kugeln.

Durch diese Ausbildung ist mithin erreicht, daß bei der Rückstellbewegung des Schaltlagerringes -der bei der Auslösebewegung entgegen einer Federkraft bewegt worden ist**-** die dem Schaltlagerring zugeordnete Schaltwalze auf den Aufnahmeteil auftrifft, der dabei als Anschlag dient. Das hat zur Folge, daß die beiden Schaltelemente, d.h. die beiden Schaltwalzen, so zueinander liegen, daß die Mitteachse der Schaltwalzen und die Berührungslinie der Schaltwalzen in einer Ebene liegen und mithin kein Moment von diesen Schaltwalzen ausgeht, das auf dem Schaltlagerring einwirken könnte.

Dabei kann nach der einen Ausführungsform die gemeinsame Anlagefläche an der gehäusefesten Führungsbuchse angebracht sein.

Nach einer anderen Ausführungsform kann aber die gemeinsame Anlagefläche auch am Schaltlagerring angeordnet sein.

Sind die Schaltwalzen ungleich groß, dann muß nach einem weiteren Merkmal der Erfindung die gemeinsame Anlagefläche entsprechend abgestuft ausgebildet sein, damit die Mittellachse der beiden Teile und die Berührungslinie der Schaltwalzen in einer Ebene liegen.

Bei den beiden vorgenannten Ausführungsformen, bei denen die gemeinsame Anlagefläche entweder an der gehäusefesten Führungsbuchse oder am Schaltlagerring angebracht ist, ragen die Anlageflächen über die Mittelachsen der Schaltwalzen hinaus.

Um bei der Montage den Schaltlagerring von beiden Seiten vollständig über die Führungsbuchse schieben zu können, ist in einer weiteren Ausführungsform die gemeinsame am Schaltlagerring angebrachte Anlagefläche so ausgebildet, daß sie vor der Führungsbuchse endet, der Innendurchmesser der Anlagefläche also größer ist als der Außendurchmesser der Führungsbuchse.

Nach einer weiteren besonders vorteilhaften Ausführungsform ist das eine Schaltelement ein in einer Ausnehmung der Führungsbuchse lagernder Rundteil, z.B. eine Schaltwalze oder Kugel und das andere Schaltelement eine am Schaltlagerring angebrachte Stützfläche mit zwei Anschlagstellen, wobei die eine Anschlagstelle auf der Mittellinie liegt, die durch die Mittelachse des Rundteiles und die Mittelachse der Welle verläuft (Nullstellung), und daß im Anschluß an diese Anschlagstelle ein erweiterter Raum entgegen der Richtung der Auslösekraft gebildet wird. In der Nullstellung liegen mithin die Mittelachse der Welle, die Mittelachse des Rundteiles und die Anschlagstelle in einer Ebene.

Bei dieser Ausführungsform ist im einzelnen die Ausbildung dann so getroffen, daß die Stützfläche die Form eines Winkels hat, dessen einer Schenkel am Rundteil anliegt, also den Anschlag bildet, und dessen anderer Schenkel tangential am Rundteil in der Null-Stellung verläuft.

Gemäß einer anderen Auführungsform der winkelförmigen Stützfläche ist der am Rundteil anliegende Schenkel bogenförmig ausgebildet.

Es ist auch möglich, die Ausbildung so zu gestalten, daß die Stützfläche die Form eines Winkels hat, dessen einer Schenkel am Rundteil anliegt und dessen anderer Schenkel kreisförmig, und zwar konzentrisch zur Mittelachse der Welle und durch die Nullstellung verläuft.

Bei allen Ausführungsformen ist mithin erreicht, daß ohne besondere Hilfsmittel bei der Rückstellbewegung des Schaltlagerringes die optimale Lage (Nullstellung) der Schaltelemente zwangsläufig erreicht wird.

In der Zeichnung sind einige beispielsweise Ausführungsformen dargestellt.
- Fig. 1: zeigt im Schnitt das erfindungsgemäße Sicherheitsabsperrventil;
- Fig. 2: zeigt einen Schnitt gemäß der Linie II-II in Fig. 1;
- Fig. 3: zeigt schematisch im Schnitt einen Teil der Führungsbuchse mit der Schaltwalze und der Schaltwalze im Schaltlagerring in der erfindungsgemäßen Ausbildung und nach der einen Ausführungsformen;
- Fig. 4 bis 6: zeigen weitere Ausführungsformen der Anlagefläche;
- Fig. 7: zeigt eine weitere besonders vorteilhafte Ausführungsform;
- Fig. 8: zeigt eine Variation der Ausführungsform gemäß Fig. 7.

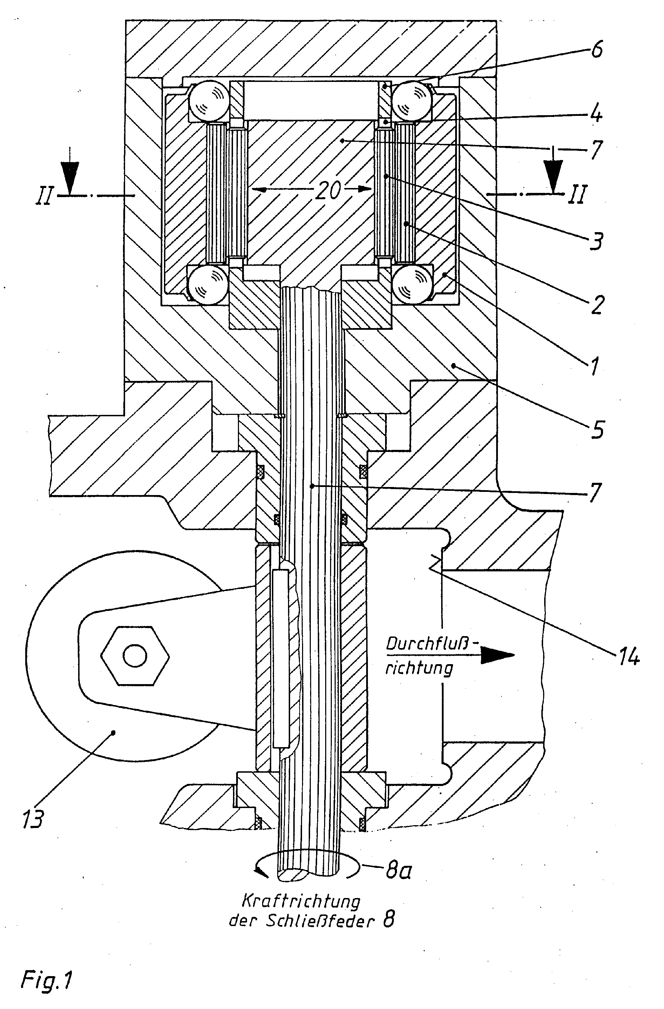

Wie sich insbesondere aus Fig. 1 ergibt, besteht das Sicherheitsabsperrventil aus der Welle 7, die unter der Wirkung einer Schließfeder 8 steht, dessen Wirkungsrichtung durch den Pfeil 8a dargestellt ist. Diese Welle 7 trägt das Verschlußstück 13, das bei Verdrehung der Welle 7 auf den Ventilsitz 14 auftrifft und die Strömung dadurch abschließt.

Die Welle 7 ist von einem Gehäuse 5 umgeben, welches die insgesamt mit 20 bezeichnete Rasteinrichtung aufweist.

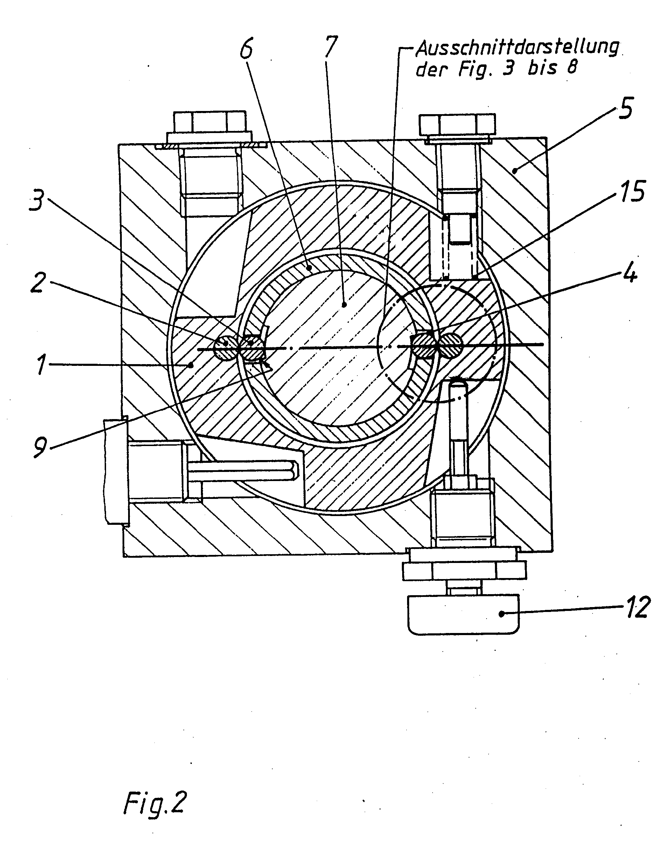

Diese Rasteinrichtung besteht aus einer die Welle 7 koaxial umgebenden gehäusefesten Führungsbuchse 6, welche die Ausnehmungen 4 aufweist, die Schlitzform besitzen (vergl. auch Fig. 2). Ferner besteht die Rasteinrichtung aus einem koaxial zu dieser Führungsbuchse 6 angeordneten Schaltlagerring 1, der drehbeweglich im Gehäuse 5 angeordnet ist.

Sowohl in der Führungsbuchse 6, wie auch im Schaltlgerring 1 sind Schaltelemente in Form von Rundteilen angeordnet. Dabei ist in der Führungsbuchse 6 und zwar in der Ausnehmung 4 eine Schaltwalze 3 und dem Schaltlagerring 1 eine Schaltwalze 2 angeordnet.

Dabei sind, wie das die Fig. 2 zeigt, mindestens zwei um 180 Grad versetzte Schaltelemente vorgesehen.

In der Offenstellung des Sicherheitsabsperrventils, d.h. also in der verriegelten Stellung liegt die Schaltwalze 3 in der Ausnehmung 4 zugleich auch an der in der Welle 7 angebrachten Schaltnase 9 an. Das bedeutet, daß in dieser Lage der Rasteinrichtung die unter der Wirkung der Schließfeder 8 stehende Welle 7 durch die Schaltnase 9 in der Offenstellung festgehalten wird.

Wie sich weiter aus Fig. 2 ergibt, ist eine insgesamt mit 12 bezeichnete Auslöseeinrichtung vorgesehen, welche im Bedarfsfall den Schaltlagerring 1 betätigt. Erfolgt eine Betätigung, d.h. eine Drehung des Schaltlagerringes 1 um einen gewissen Winkel, dann kann die Schaltwalze 3 nach außen ausweichen, wodurch die Schaltnase 9 nicht mehr ihre Haltewirkung ausüben kann und demzufolge die Welle 7 unter der Wirkung der Schließfeder 8 eine Drehbewegung ausführt und weiterhin das Verschlußstück 13 auf den Ventilsitz 14 drückt.

In der Schließstellung des Sicherheitsabsperrventiles liegen die Schaltwalzen 2 und 3 nicht mehr gegenüber.

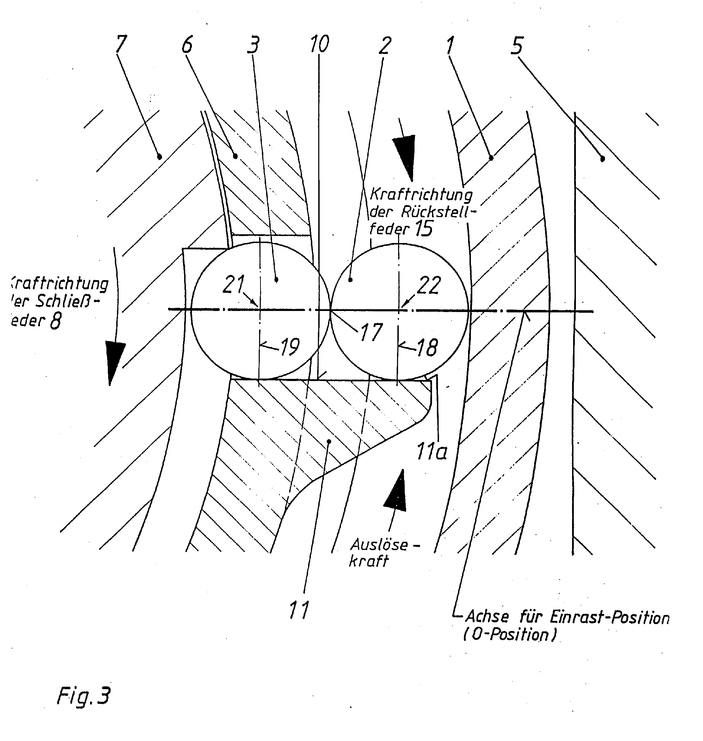

Wird nun das Sicherheitsventil wieder in die Nullstellung gebracht, d.h. wird das Verschlußstück 13 wieder in Offenstellung gebracht und demzufolge die Welle 7 entsprechend verdreht, so daß die Schaltnase 9 wieder ihre Verriegelungsstellung einnimmt und der Schaltlagerring 1 seine Ausgangslage wegen seiner Rückstellfeder 15 wieder erreicht, dann nehmen zwangsläufig die Schaltwalzen 2 und 3 die optimale Lage (Nullstellung) ein, da der Aufnahmeteil 11 für die Schaltwalze 3 zugleich als Anschlag 11a für die Schaltwalze 2 dient, die dem Schaltlagerring 1 zugeordnet ist (siehe Fig. 3).

In der in Fig. 3 dargestellten Ausführungsform bilden der Aufnahmeteil 11 und der Anschlag 11a eine gemeinsame Anlagefläche 10. Die Schaltwalzen sind gleich groß im Durchmesser.

Daraus wird deutlich, daß wegen der gemeinsamen Anlagefläche 10 die Mittelachse 21 der Schaltwalze 3 und die Mittelachse 22 der Schaltwalze 2 miteinander fluchten und durch den gemeinsamen Berührungspunkt 17 verlaufen. Das bedeutet weiter, daß in dieser Stellung der Schaltelemente kein Moment auf den Schaltlagerring 1 ausgeübt werden kann und somit eine optimale Nullstellung erreicht ist.

Es wird weiter deutlich, daß bei der Rückführung des Schaltlagerringes 1 in die Ausgangslage die ideale Nullstellung zwangsläufig, also ohne Hilfsmittel erreicht wird.

Bei der in Fig. 3 dargestellten Ausführungsform ist die Anlagefläche 10 an der Führungsbuchse 6 angebracht.

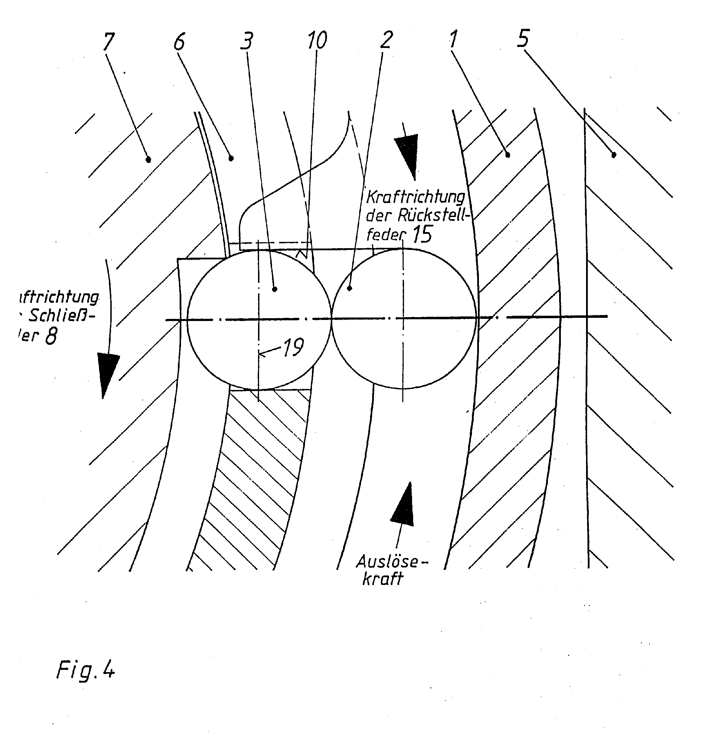

Es ist selbstverständlich auch möglich -und das zeigt Fig. 4- die Anlagefläche 10 an dem Schaltlagerring 1 anzubringen.

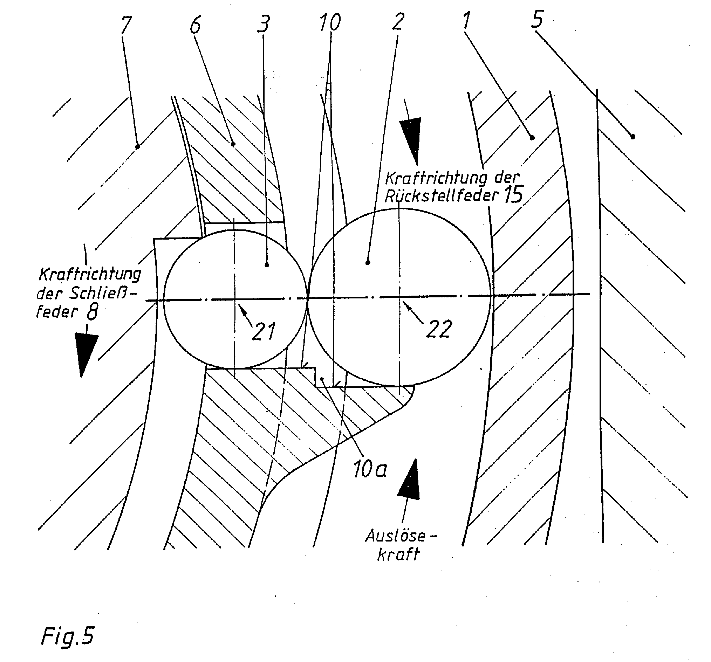

In Fig. 5 ist eine andere Ausführungsform dargestellt, bei de die Schaltwalze 3 und die Schaltwalze 2 unterschiedlich groß sind. In diesem Falle muß natürlich die Anlagefläche 10 die Abstufung 10a aufweisen, denn nur so können die Mittelachsen 21 und 22, wie das anhand der Fig. 3 erläutert wird, die optimale Lage einnehmen.

Bei den Ausbildungen gemäß Fig. 3 bis 5 ragt die Anlagefläche 10 über die Mittellinie 18 bzw. 19 der Schaltwalze 2 bzw. 3 hinaus. Um die Montierbarkeit des Schaltlagerringes zu gewährleisten, kann die Anlagefläche 10 somit entweder nur im unteren oder im oberen Bereich der Rasteinrichtung 20 angeordnet sein.

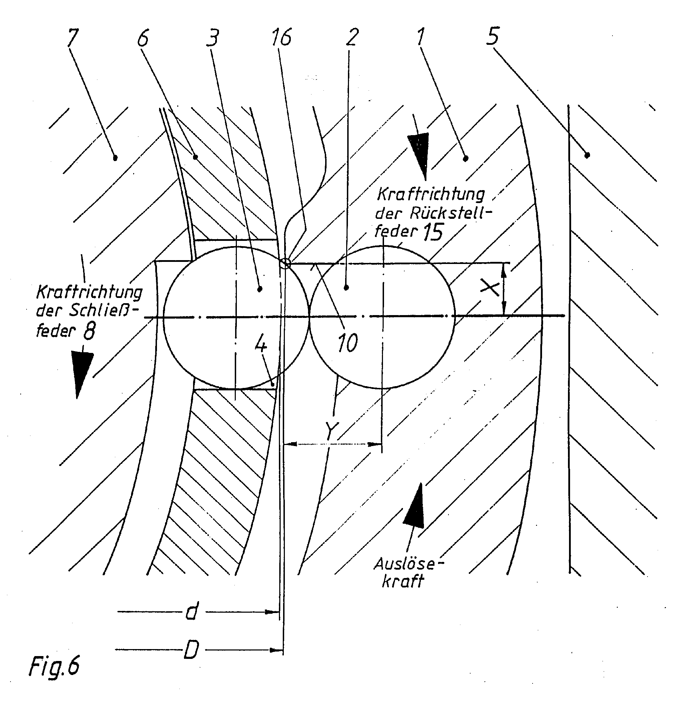

Sofern gewünscht wird, daß der Schaltlagerring 1 in beiden Richtungen bei der Montage bewegt werden kann, ist eine Ausführungsform vorgesehen, die in Fig. 6 dargestellt ist.

Dabei endet die gemeinsame am Schaltlagerring 1 angebrachte Anlagefläche 10 vor der Ausnehmung 4 in der Führungsbuchse 6, d.h. der Innendurchmesser D der Anlagefläche 10 ist geringfügig größer als der Außendurchmesser d der Führungsbuchse 6. Die Ausbildung ist dabei so getroffen, daß die Kante 16 der Anlagefläche an der Schaltwalze 3 anliegt und zwar vor der Ausnehmung 4.

Die Anlagekante 16 muß dabei bezüglich der Abstandsmaße X und Y -ausgehend vom Mittelpunkt der Schaltwalze 2- sehr exakt ausgebildet sein.

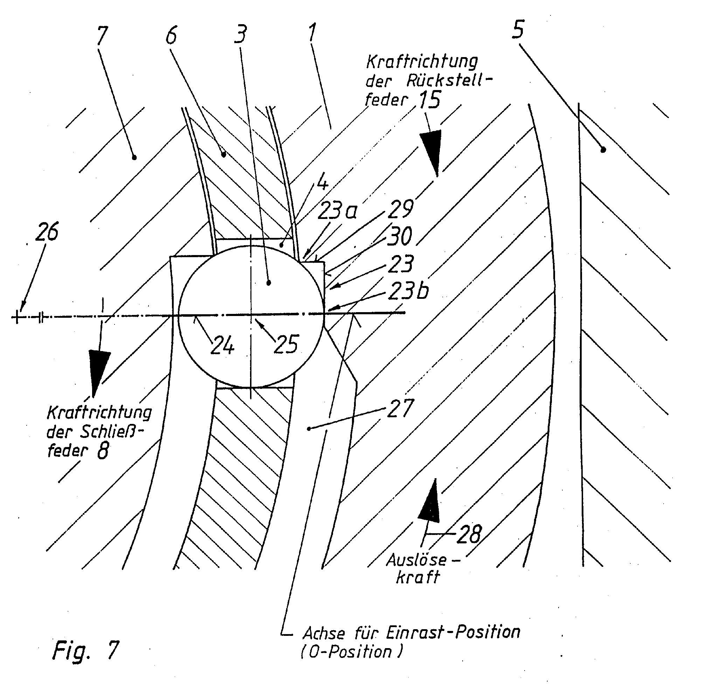

In der Fig. 7 ist eine besonders vorteilhafte Ausführungsform und für die Praxis bedeutsame Ausführungsform dargestellt.

Auch bei dieser Ausführungsform sind sowohl in der Führungsbuchse 6, wie auch im Schaltlagerring 1 Schalteleemente angeordnet. Dabei ist in der Führungsbuchse 6 und zwar in der Ausnehmung 4 ein Rundteil, z.B. in Form einer Schaltwalze 3 vorgesehen. Anstelle einer Schaltwalze kann auch eine Kugel Verwendung finden.

Das andere Schaltelement, das am Schaltlagerring 1 angebracht ist, besteht im wesentlichen aus einer Stützfläche 23, welche die eine Anschlagstelle 23a und die andere Anschlagstelle 23b aufweist. Die Anschlagstelle 23a liegt dabei am Rundteil 3, d.h. der Schaltwalze an, und bildet den eigentlichen Anschlag, während die andere Anschlagstelle 23b auf einer Mittellinie 24 liegt, die durch die Mittelachse 25 des Rundteiles 3 und die Mittelachse 26 der Welle 7 verläuft.

Durch diese Anschlagstelle ist die sogenannte Null-Stellung definiert, in der auf dem Schaltlagerring kein Drehmoment ausgeübt wird, wenn das Sicherheitsabsperrventil die Offenlage einnimmt. Im Anschluß an die Anschlagstelle 23b ist ein erweiterter Raum 27 gebildet und zwar entgegen der Richtung der Auslösekraft 28.

Auch hier wird deutlich, daß in der Offenstellung des Sicherheitsabsperrventils, d.h. also in der verriegelten Stellung die Welle 7 durch die Schaltnase 9 festgehalten wird, wenn die Stützfläche 23 die oben erläuterte Lage einnimmt.

Es wird weiter deutlich, daß bei Betätigung der Auslöseeinrichtung der Schaltlagerring 1 sich um einen gewissen Winkel verdreht, so daß der Rundteil 3 in den erweiterten Raum 27 ausweichen kann und mithin die Schaltnase ihre Haltewirkung nicht mehr ausüben kann; wie das bereits beschrieben wurde.

Wie die Fig. 7 im einzelnen zeigt, kann dabei die Stützfläche die Form eines Winkels aufweisen, dessen einer Schenkel 29 am Rundteil 3 anschlägt und dessen anderer Schenkel 30 tangential am Rundteil in der Nullstellung verläuft, wie sie oben definiert wurde, also senkrecht zur Mittellinie 24 steht.

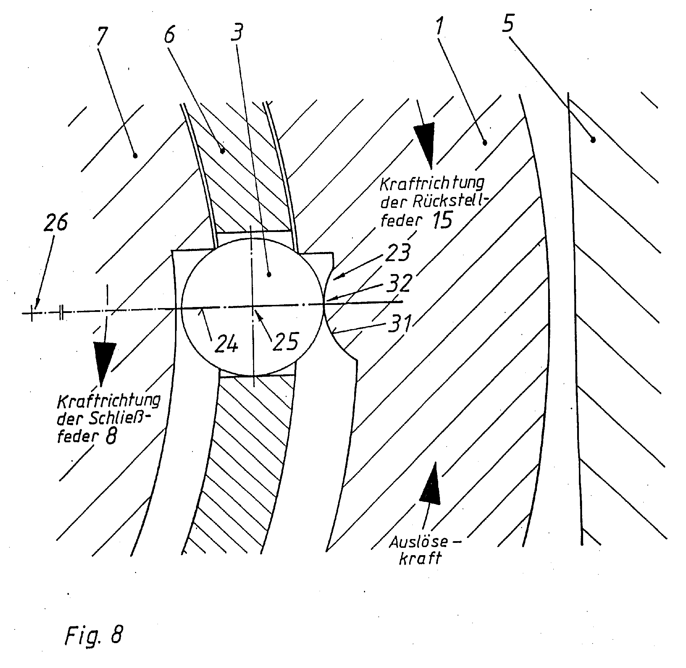

Fig. 8 zeigt eine Variation der Ausbildung gemäß Fig. 7. Dort ist auch eine Stützfläche 23 vorgesehen, jedoch ist der eine Schenkel der Stützfläche bogenförmig 31 ausgebildet.

Auch hier ist die Ausbildung so getroffen, daß die Anschlagstelle 32 auf der verlängerten Mittellinie 24 durch die Mittelachse 25 des Rundteiles und die Mittelachse 26 der Welle liegt.

Bei der Ausführungsform gemäß Fig. 7 ist der eine Schenkel der Stützfläche 23 geradlinig ausgebildet. Die Ausbildung kann natürlich auch so getroffen sein, daß dieser Schenkel kreisförmig und zwar konzentrisch zur Mittelachse 26 der Welle 7 verläuft.

## Patentansprüche

1. Selbsttätiges Sicherheitsabsperrventil, insbesondere für Druckregelanlagen, dessen Verschlußstück (13) auf einer in Umfangsrichtung federbelasteten Welle (7) angeordnet, in der Offenstellung mittels einer Rasteinrichtung (20) verriegelbar und mittels einer die Rasteinrichtung (20) entriegelnden Auslöseeinrichtung (12) betätigbar ist, wobei die Rasteinrichtung (20) aus einer die Welle (7) koaxial umgebenden gehäusefesten Führungsbuchse (6) mit Ausnehmungen und einem die Führungsbuchse (6) koaxial umgebenden im Gehäuse drehbeweglich angeordnetem Schaltlagerring (1) besteht, wobei in der Führungsbuchse (6) und im Schaltlagerring (1) Schaltelemente (2,3) vorgesehen sind,
**dadurch gekennzeichnet,** daß
die Rückstellbewegung des Schaltlagerringes (1) durch einen am Schaltlagerring oder an der Führungsbüchse angeordneten, mit den Schaltelementen (2,3) zusammen wirkenden Anschlag (11a, 16, 23,) begrenzt ist.

2. Sicherheitsabsperrventil nach Anspruch 1
**dadurch gekennzeichnet,** daß
der Aufnahmeteil (11) für das eine Schaltelement (3) zugleich als Anschlag (11a) für das andere Schaltelement (2) dient.

3. Sicherheitsabsperrventil nach Anspruch 1
**dadurch gekennzeichnet,** daß
die Schaltelemente auf einer gemeinsamen Anlagefläche (10) aufliegen.

4. Sicherheitsabsperrventil nach Anspruch 1
**dadurch gekennzeichnet,** daß
die Schaltelemente Rundteile, z.B. Schaltwalzen (2, 3) oder Schaltkugeln sind.

5. Sicherheitsabsperrventil nach Anspruch 3
**dadurch gekennzeichnet,** daß
die gemeinsame Anlagefläche (10) an der gehäusefesten Führungsbuchse (6) angebracht ist.

6. Sicherheitsabsperrventil nach Anspruch 3
**dadurch gekennzeichnet,** daß
die gemeinsame anlagefläche (10) am Schaltlagerring (1) angeordnet ist.

7. Sicherheitsabsperrventil nach Anspruch 3
**dadurch gekennzeichnet,** daß
die gemeinsame Anlagefläche bei ungleich großen Schaltwalzen eine Abstufung (10a) aufweist.

8. Sicherheitsabsperrventil nach Anspruch 3
**dadurch gekennzeichnet,** daß
die gemeinsame am Schaltlagerring (1) angebrachte anlagefläche (10) vor der Ausnehmung (4) in der Führungsbuchse (6) endet.

9. Sicherheitsabsperrventil nach Anspruch 1
**dadurch gekennzeichnet,** daß
das eine Schaltelement ein in einer Ausnehmung (4) der Führungsbuchse (6) lagernder Rundteil (3) z.B. eine Schaltwalze oder Kugel ist und das andere Schalttelement eine am Schaltlagerring (1) angebrachte Stützfläche (23) mit zwei Anschlagstellen (23a, 23b) ist, wobei die eine Anschlagstelle (23b) auf der Mittellinie (24) liegt, die durch die Mittelachse (25) des Rundteiles (3) und die Mittelachse (26) der Welle (7) verläuft (Nullstellung) und daß im Anschluß an die Anschlagstelle (23b) ein erweiterter Raum (27) entgegen der Richtung der Auslösekraft (28) gebildet wird.

10. Sicherheitsabsperrventil nach Anspruch 9
**dadurch gekennzeichnet,** daß
die Stützfläche (23) die Form eines Winkels hat, dessen einer Schenkel (29) am Rundteil (3) anliegt und dessen anderer Schenkel (30) tangential am Rundteil in der Null-Stellung verläuft.

11. Sicherheitsabsperrventil nach Anspruch 9
**dadurch gekennzeichnet,** daß
der eine Schenkel der Stützfläche (23) bogenförmig verläuft und den Rundteil (3) an einer Anschlagstelle (32) in der Nullstellung berührt.

12. Sicherheitsabsperrventil nach Anspruch 9
**dadurch gekennzeichnet,** daß
die Stützfläche (23) in Form eines Winkels hat, dessen einer Schenkel (23a) am Rundteil (3) anliegt und dessen anderer Schenkel (23b) kreisförmig und zwar konzentrisch zur Mittelachse (26) der Welle (7) und durch die Null-Stellung verläuft.

## Claims

1. Automatic safety shut-off valve, in particular for pressure-regulating plants, the closure member (13) of which valve is arranged on a shaft (7) spring-loaded in circumferential direction, is latchable in the open setting by means of a detent equipment (20) and is actuable by means of a trigger equipment (12) unlatching the detent equipment (20), wherein the detent equipment (20) consists of a guide bush (6), which is fast with the housing and surrounds the shaft (7) co-axially, with recesses and a switch bearing ring (1), which surrounds the guide bush (6) co-axially and is arranged to be rotationally movable in the housing, wherein switching elements (2, 3) are provided in the guide bush (6) and in the switch bearing ring (1) characterised thereby, that the restoring movement of the switch bearing ring (1) is limited by an abutment (11a, 16, 23), which is arranged at the switch bearing ring (1) or at the guide bush (6) and which co-operates with the switching elements (2, 3).

2. Safety shut-off valve according to claim 1, characterised thereby, that the receptacle part (11) for the one switching element (3) at the same time serves as abutment (11a) for the other switching element (2).

3. Safety shut-off valve according to claim 1, characterised thereby, that the switching elements rest on a common bearing surface (10).

4. Safety shut-off valve according to claim 1, characterised thereby, that the switching elements are round parts, for example switching cylinders (2, 3) or switching balls.

5. Safety shut-off valve according to claim 3, characterised thereby, that the common bearing surface (10) is mounted in the guide bush (6) fast with the housing.

6. Safety shut-off valve according to claim 3, characterised thereby, that the common bearing surface (10) is arranged at the switch bearing ring (1).

7. Safety shut-off valve according to claim 3, characterised thereby, that the common bearing surface (10) comprises a stepped portion (10a) in the case of unequally large switching cylinders.

8. Safety shut-off valve according to claim 3, characterised thereby, that the common bearing surface (10) mounted at the switching bearing ring (1) ends before the recess (4) in the guide bush (6).

9. Safety shut-off valve according to claim 1, characterised thereby, that the one switching element is a round part (3), for example a switching cylinder or ball, which is borne in a recess (4) of the guide bush (6) and the other switching element is a support surface (23), which is made in the switching bearing ring (1) and has two abutment places (23a, 23b), wherein the one abutment place (23b) lies on the centre line (24), which extends (zero setting) through the central axis (25) of the round part (3) and the central axis (26) of the shaft (7) and that, adjoining the abutment place (23b), an enlarged space (27) is formed oppositely to the direction of the triggering force (28).

10. Safety shut-off valve according to claim 9, characterised thereby, that the support surface (23) has the shape of an angle, the one limb (29) of which rests against the round part (3) and the other limb (30) of which extends tangentially at the round part (3) in the zero setting.

11. Safety shut-off valve according to claim 9, characterised thereby, that the one limb of the support surface (23) extends arcuately and touches the round part (3) at an abutment place (32) in the zero setting.

12. Safety shut-off valve according to claim 9, characterised thereby, that the support surface (23) has the shape of an angle, the one limb (23a) of which rests against the round part (23b) and the other limb (30) of which extends circularly and namely concentrically with the central axis (26) of the shaft (7) and through the zero setting.

## Revendications

1. Soupape d'arrêt automatique de sûreté, notamment pour des installations de réglage de pression, dont l'obturateur (13) est monté sur un arbre (7) sollicité en direction circonférentielle par un ressort, cet arbre pouvant être verrouillé dans la position d'ouverture au moyen d'un dispositif à cran d'arrêt (20) et actionné au moyen d'un dispositif de déclenchement (12) libérant le dispositif à cran d'arrêt (20), ce dispositif à cran d'arrêt (20) comportant une douille fixe de guidage (6), entourant coaxialement l'arbre (7) et pourvue d'évidements, et une bague de commande (1) entourant coaxialement la douille de guidage (6) et montée de manière rotative dans un carter, des éléments d'enclenchement (2, 3) étant prévus dans la douille de guidage (6) et dans la bague de commande (1), **caractérisée** en ce que le mouvement de rappel de la bague de commande (1) est limité par un arrêt (11a, 16, 23) disposé sur la bague de commande ou sur la douille de guidage et coopérant avec les éléments d'enclenchement (2, 3).

2. Soupape selon la revendication 1, **caractérisée** en ce que l'organe de support (11) prévu pour l'un (3) des éléments d'enclenchement sert également d'arrêt (11a) pour l'autre élément d'enclenchement (2).

3. Soupape selon la revendication 1, **caractérisée** en ce que les éléments d'enclenchement s'appuient sur une surface d'appui commune (10).

4. Soupape selon la revendication 1, **caractérisée** en ce que les éléments d'enclenchement sont des pièces rondes, par exemple des rouleaux (2, 3) ou des billes.

5. Soupape selon la revendication 3, **caractérisée** en ce que la surface d'appui commune (10) est ménagée sur la douille fixe de guidage (6).

6. Soupape selon la revendication 3, **caractérisée** en ce que la surface d'appui commune (10) est ménagée sur la bague de commande (1).

7. Soupape selon la revendication 3, **caractérisée** en ce que la surface d'appui commune, avec l'utilisation de rouleaux de tailles différentes, présente un décrochement (10a).

8. Soupape selon la revendication 3, **caractérisée** en ce que la surface d'appui commune (10) ménagée sur la bague de commande (1) se termine devant l'évidement (4) de la douille de guidage (6).

9. Soupape selon la revendication 1, **caractérisée** en ce que l'un des éléments d'enclenchement est une pièce ronde (3), par exemple un rouleau ou une bille, logée dans l'évidement (4) de la douille de guidage (6) et l'autre élément d'enclenchement est une surface de retenue (23) ménagée sur la bague de commande (1) et pourvue de deux zones d'arrêt (23a, 23b) dont l'une (23b) se trouve sur la ligne médiane (24) qui passe par l'axe (25) de la pièce ronde (3) et l'axe (26) de l'arbre (7) (position neutre) et en ce qu'un intervalle élargi (27) est ménagé à la suite de ladite zone d'arrêt (23b) dans le sens opposé à celui de la force de déclenchement (28).

10. Soupape selon la revendication 9, **caractérisée** en ce que la surface de retenue (23) a la forme d'un angle dont un côté (29) s'appuie contre la pièce ronde (3) et dont l'autre côté (30) est tangente à la pièce ronde à la position neutre.

11. Soupape selon la revendication 9, **caractérisée** en ce qu'un côté de la surface de retenue (23) a une forme bombée et touche la pièce ronde (3) dans une zone d'arrêt (32) à la position neutre.

12. Soupape selon la revendication 9, **caractérisée** en ce que la surface de retenue (23) a la forme d'un angle dont un côté (23a) s'appuie contre la pièce ronde (3) et dont l'autre côté (23b) s'étend suivant un arc de cercle centré sur l'axe (26) de l'arbre (7) et passe par la position neutre.
